# EUROPEAN PATENT SPECIFICATION

(11) **EP 3 868 959 B1**
(45) Date of publication and mention of the grant of the patent: **02.12.2026**
(21) Application number: 20179499.7
(22) Date of filing: 11.06.2020
(51) Int. Cl.: E01F 9/688, B60Q 7/00

(54) **WARNING STRUCTURE AND BRACKET**
WARNSTRUKTUR UND HALTERUNG
STRUCTURE D'AVERTISSEMENT ET SUPPORT

(30) Priority: 21.02.2020 CN 202010107563
(43) Date of publication of application: 25.08.2021
(73) Proprietor: Fulian Precision Electronics (Tianjin) Co., LTD., Tianjin (CN)
(72) Inventor: WANG, Pao-Ching, Tianjin (CN); LIN, Ke-Cheng, Tianjin (CN); WANG, Wen-Chen, Tianjin (CN)
(74) Representative: Zaboliene, Reda

(56) References cited:
- EP-A1- 3 416 157
- EP-A1- 3 419 007
- CN-A- 107 009 957
- CN-U- 203 603 083
- DE-A1- 102013 104 990
- JP-A- H09 327 344
- TW-B- I 642 829

## Description

### FIELD

The disclosure generally relates to warning structures, and more particularly to a warning structure for use on the road.

### BACKGROUND

Many warning structures come equipped with rollers. Generally, a warning structure, such as a warning triangle, needs to be placed on the ground during an emergency stop. However, a wind may cause the warning structure to move out of position.

CN107009957A discloses a mobile triangular caution board for a vehicle. In a situation that a triangular caution sign is needed when the vehicle breaks down or in emergencies, the mobile triangular caution board for the vehicle can be automatically arranged at a safe distance which is required, and can automatically return to a position near the vehicle controlled by a remote control or a mobile phone after the accident is solved. A triangular caution board is arranged on a mobile folding cart which is battery-powered. Through a button, the remote control or the mobile phone, a control circuit controls two deceleration DC motors on the mobile folding cart to realize the control of distance and direction and achieve the automatic arrangement and recovery of the triangular caution board. After use, an omni wheel and a bracket can be folded under a base of the mobile folding cart and the triangular caution board is manually folded. The triangular caution board after folded is only slightly larger than the base of the mobile folding cart and is easy for storage.

### SUMMARY

The present disclosure aims to solve the technical problem existing in the prior art. For this reason, the disclosure discloses a bracket and a warning structure using the bracket. The bracket is able to resist the force of a wind and stay still.

The invention is set out in the appended set of claims.

### BRIEF DESCRIPTION OF THE DRAWINGS

Implementations of the present disclosure will now be described, by way of embodiments, with reference to the attached figures.
FIG. 1 is an assembled, isometric view of an embodiment of a warning structure.
FIG. 2 is an isometric view of a first extending member and a stopping assembly of the warning structure.
FIG. 3 is an exploded, isometric view of the first extending member and the stopping assembly.
FIG. 4 is a cross-sectional view taken along line IV-IV in FIG. 2.

### DETAILED DESCRIPTION

It will be appreciated that for simplicity and clarity of illustration, where appropriate, reference numerals have been repeated among the different figures to indicate corresponding or analogous elements. In addition, numerous specific details are set forth in order to provide a thorough understanding of the embodiments described herein. However, it will be understood by those of ordinary skill in the art that the embodiments described herein can be practiced without these specific details. In other instances, methods, procedures, and components have not been described in detail so as not to obscure the related relevant feature being described. Also, the description is not to be considered as limiting the scope of the embodiments described herein. The drawings are not necessarily to scale, and the proportions of certain parts may be exaggerated to show details and features of the present disclosure better. The disclosure is by way of embodiments and not by way of limitation in the figures of the accompanying drawings, in which like references indicate similar elements. It should be noted that references to "an" or "one" embodiment in this disclosure are not necessarily to the same embodiment, and such references mean "at least one."

Several definitions that apply throughout this disclosure will now be presented.

The term "substantially" is defined to be essentially conforming to the particular dimension, shape, or other feature that the term modifies, such that the component need not be exact. For example, "substantially cylindrical" means that the object resembles a cylinder, but can have one or more deviations from a true cylinder. The term "comprising," when utilized, means "including, but not necessarily limited to"; it specifically indicates open-ended inclusion or membership in the so-described combination, group, series, and the like. The references "a plurality of" and "a number of" mean "at least two."

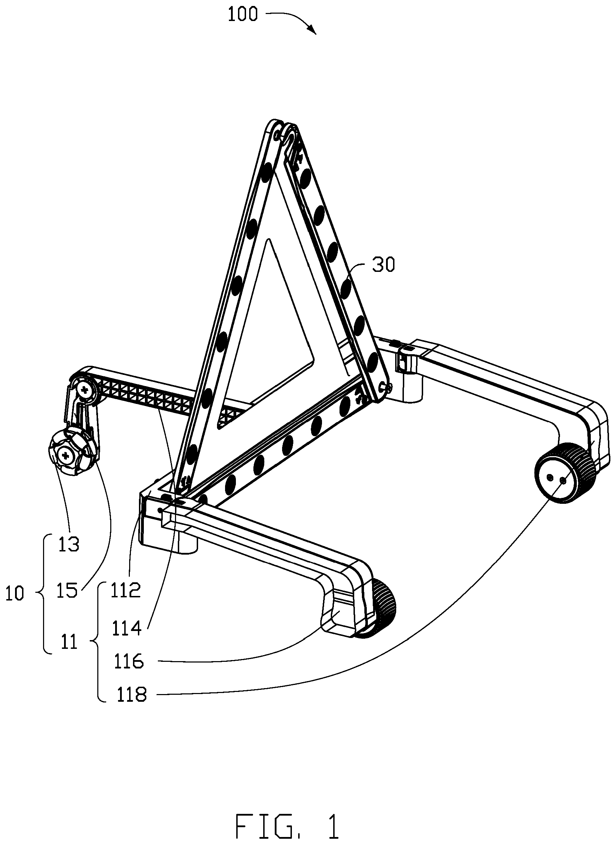

FIG. 1 shows an embodiment of a warning structure 100 including a bracket 10 and a warning member 30 provided on the bracket 10.

The bracket 10 includes a main body 11, a plurality of rollers 13, and at least one stopping assembly 15. The main body 11 is connected to the warning member 30. The at least one stopping assembly 15 is connected to the main body 11 and configured to prevent the bracket 10 from being moved by an external force, such as wind.

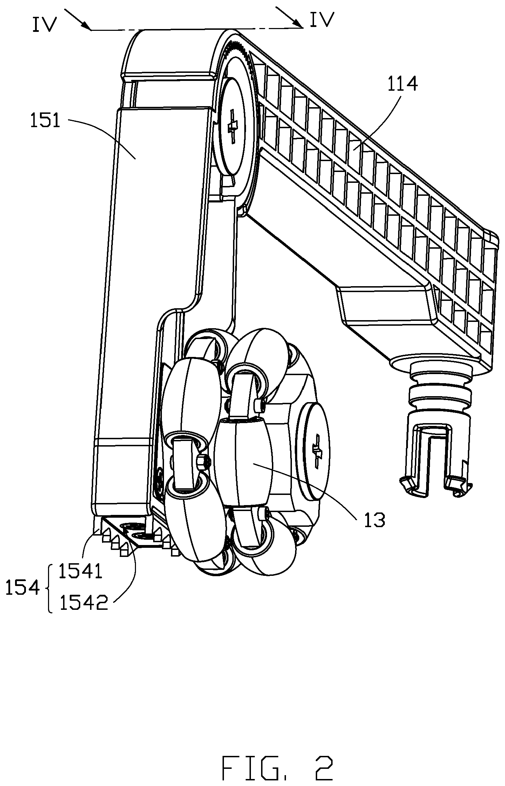

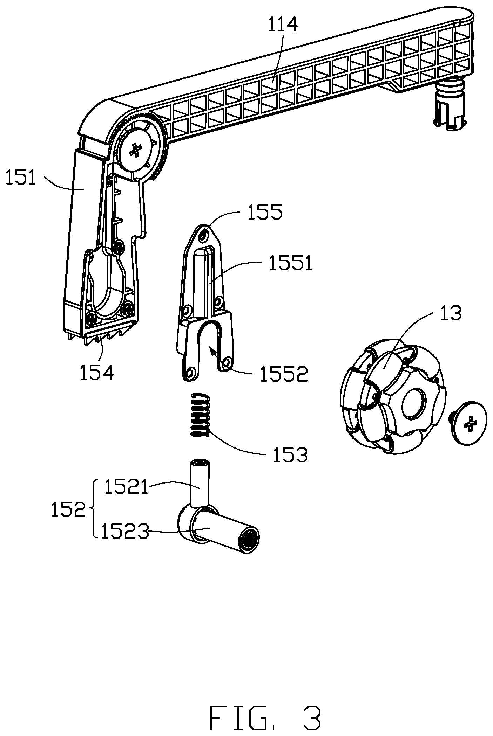

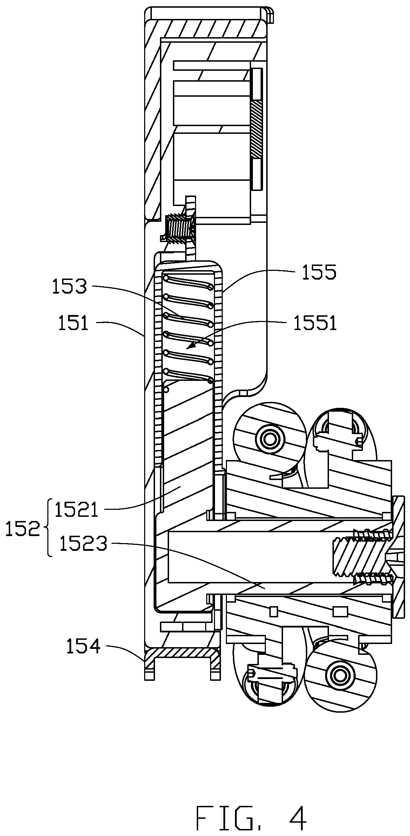

Referring to FIGS. 2- 4, the stopping assembly 15 includes a support member 151, a mounting member 152, and a resilient member 153. The support member 151 is connected to the main body 11. The mounting member 152 is movably mounted on the support member 151. The mounting member 152 is connected to a corresponding one of the rollers 13. The resilient member 153 elastically resists the support member 151 and the mounting member 152 to bias the mounting member 152 toward a ground. When the support member 151 is subjected to a downward force, a bottom of the support member 151 abuts against the ground to keep the bracket 10 stationary.

In one embodiment, the stopping assembly 15 further includes a stopping member 154. The stopping member 154 is located on a bottom end of the support member 151. The stopping member 154 is provided with a plurality of protruding portions 1541. The protruding portions 1541 are configured to be inserted into the ground. Specifically, the stopping member 154 includes a fixing portion 1542, and the plurality of protruding portions 1541 is located on opposite sides of the fixing portion 1542.

In one embodiment, the stopping assembly 15 further includes a sleeve 155. The sleeve 155 is fixed in the support member 151. The sleeve 155 defines a receiving cavity 1551. The resilient member 153 is received in the receiving cavity 1551. The mounting member 152 includes a first mounting portion 1521 and a second mounting portion 1523, the second mounting portion 1523 is substantially perpendicular to the first mounting portion 1521. The first mounting portion 1521 is movably disposed in the receiving cavity 1551 and contacts the resilient member 153. The corresponding one of the rollers 13 is rotationally sleeved on the second mounting portion 1523.

The sleeve 155 further defines a guiding groove 1552, and the second mounting portion 1523 is slidably passed through the guiding groove 1552.

The main body 11 includes a connecting member 112, a first extending member 114, a second extending member 116, and a third extending member 118. The connecting member 112 is connected to the warning member 30. The first extending member 114, the second extending member 116, and the third extending member 118 are connected to the connecting member 112. The first extending member 114 is connected to a substantially middle portion of the connecting member 112. The second extending member 116 and the third extending member 118 are respectively connected to two ends of the connecting member 112. The second extending member 116 and the third extending member 118 are located on one side of the connecting member 112, and the first extending member 114 is located on another side of the connecting member 112.

A distal end of the second extending member 116 and a distal end of the third extending member 118 are connected to a corresponding roller 13. A distal end of the first extending member 114 is connected to the stopping assembly 15.

In one embodiment, the warning member 30 is a triangle. It can be understood that in other embodiments, the warning member 30 may be other shapes.

In use, after the warning structure 100 is set in position, when an external force such as a wind blows, the external force may tilt the warning member 30, and a portion of the external force is converted into a downward force. Under the action of the downward force, the first extending member 114 drives the support member 151 to move downward to compress the resilient member 153, and the stopping member 154 inserts into the ground. When the external force vanishes, the resilient member 153 drives the support member 151 to restore a position of the support member 151.

It can be understood that in other embodiments, the number of the stopping assemblies 15 can be set as many as required and the stopping assemblies 15 may be disposed on other parts such as the second extending member 116 and the third extending member 118.

As described above, the support member 151 of the bracket 10 prevents the warning structure 100 from being moved by an external force, thereby improving a stability of the warning structure 100.

The embodiments shown and described above are only examples. Therefore, many commonly-known features and details are neither shown nor described. Even though numerous characteristics and advantages of the present technology have been set forth in the foregoing description, together with details of the structure and function of the present disclosure, the disclosure is illustrative only, and changes may be made in the detail, including in matters of shape, size, and arrangement of the parts within the principles of the present disclosure, up to and including the full extent established by the broad general meaning of the terms used in the claims. It will, therefore, be appreciated that the embodiments described above may be modified within the scope of the claims.

## Claims

1. A bracket (10) for use with a warning member (30) mounted on it, comprising:
a main body (11);
a plurality of rollers (13);
**characterized by**
a stopping assembly (15) comprising a support member (151), a mounting member (152), and a resilient member (153); wherein:
the support member (151) is coupled to the main body (11);
the mounting member (152) is movably mounted to the support member (151);
one of the plurality of rollers (13) is rotationally mounted to the mounting member (152), and the
other of the plurality of rollers (13) is rotationally mounted to the main body (11);
the resilient member (153) elastically resists the support member (151) and the mounting member (152) to bias the mounting member (152);
when the support member (151) is subjected to a downward force which results from external wind force on the warning member (30), the support member (151) abuts against a ground to keep the bracket (10) stationary;
the stopping assembly (15) further comprises a stopping member (154) mounted on a bottom end of the support member (151), the stopping member (154) comprises at least one protruding portion (1541) configured to insert into the ground.

2. The bracket (10) of claim 1, wherein:
the stopping member (154) comprises a fixing portion (1542) and a plurality of the protruding portions (1541); and
the plurality of the protruding portions (1541) is located on opposite sides of the fixing portion (1542).

3. The bracket (10) of claim 1, wherein:
the stopping assembly (15) further comprises a sleeve (155);
the sleeve (155) is fixed in the support member (151);
the sleeve (155) defines a receiving cavity (1551);
the mounting member (152) comprises a first mounting portion (1521) and a second mounting portion (1523);
the first mounting portion (1521) is movably disposed in the receiving cavity (1551);
a corresponding one of the plurality of rollers (13) is rotationally sleeved on the second mounting portion (1523); and
the resilient member (153) is mounted in the receiving cavity (1551) and contacts the first mounting portion (1521).

4. The bracket (10) of claim 3, wherein:
the sleeve (155) further defines a guiding groove (1552); and
the second mounting portion (1523) is movably passed through the guiding groove (1552).

5. The bracket (10) of claim 1, wherein:
the main body (11) comprises a connecting member (112), a first extending member (114), a second extending member (116), and a third extending member (118);
the first extending member (114) is connected to a middle portion of the connecting member (112);
the second extending member (116) and the third extending member (118) are respectively connected to two ends of the connecting member (112); and
the support member (151) is coupled to the first extending member (114).

6. A warning structure (100) comprising the bracket (10) of any one of claims 1 to 5 and a warning member (30) mounted on the bracket (10).

## Patentansprüche

1. Eine Halterung (10) zur Verwendung mit einem daran angebrachten Warnelement (30), umfassend:
einen Hauptkörper (11);
eine Vielzahl von Rollen (13);
**gekennzeichnet durch**
eine Stoppanordnung (15), die ein Stützelement (151), ein Montageelement (152) und ein elastisches Element (153) umfasst; wobei:
das Stützelement (151) mit dem Hauptkörper (11) gekoppelt ist;
das Montageelement (152) beweglich an dem Stützelement (151) angebracht ist;
eine der Vielzahl von Rollen (13) drehbar an dem Montageelement (152) angebracht ist und die andere der Vielzahl von Rollen (13) an dem Hauptkörper (11) angebracht ist;
das elastische Element (153) dem Stützelement (151) und dem Montageelement (152) elastisch entgegenwirkt, um das Montageelement (152) vorzuspannen;
wenn das Stützelement (151) einer nach unten gerichteten Kraft ausgesetzt ist, die aus einer externen Windkraft auf das Warnelement (30) resultiert, das Stützelement (151) an einem Boden anliegt, um die Halterung (10) stationär zu halten;
die Stoppanordnung (15) ferner ein Stoppelement (154) umfasst, das an einem unteren Ende des Stützelements (151) angebracht ist,
wobei das Stoppelement (154) mindestens einen vorstehenden Abschnitt (1541) umfasst, der so konfiguriert ist, dass er in den Boden eindringt.

2. Die Halterung (10) nach Anspruch 1, wobei:
das Stoppelement (154) einen Befestigungsabschnitt (1542) und eine Vielzahl der vorstehenden Abschnitte (1541) umfasst; und
die Vielzahl der vorstehenden Abschnitte (1541) auf gegenüberliegenden Seiten des Befestigungsabschnitts (1542) angeordnet ist.

3. Die Halterung (10) nach Anspruch 1, wobei:
die Stoppanordnung (15) ferner eine Hülse (155) umfasst; die Hülse (155) in dem Stützelement (151) befestigt ist;
die Hülse (155) einen Aufnahmehohlraum (1551) definiert;
das Montageelement (152) einen ersten Montageabschnitt (1521) und einen zweiten Montageabschnitt (1523) umfasst;
der erste Montageabschnitt (1521) beweglich in dem Aufnahmehohlraum (1551) angeordnet ist;
eine entsprechende der Vielzahl von Rollen (13) drehbar auf den zweiten Montageabschnitt (1523) aufgesteckt ist; und
das elastische Element (153) in dem Aufnahmehohlraum (1551) montiert ist und den ersten Montageabschnitt (1521) kontaktiert.

4. Die Halterung (10) nach Anspruch 3, wobei:
die Hülse (155) ferner eine Führungsnut (1552) definiert; und
der zweite Montageabschnitt (1523) beweglich durch die Führungsnut (1552) geführt ist.

5. Die Halterung (10) nach Anspruch 1, wobei:
der Hauptkörper (11) ein Verbindungselement (112), ein erstes Verlängerungselement (114), ein zweites Verlängerungselement (116) und ein drittes Verlängerungselement (118) umfasst;
das erste Verlängerungselement (114) mit einem mittleren Abschnitt des Verbindungselements (112) verbunden ist;
das zweite Verlängerungselement (116) und das dritte Verlängerungselement (118) jeweils mit zwei Enden des Verbindungselements (112) verbunden sind; und
das Stützelement (151) mit dem ersten Verlängerungselement (114) gekoppelt ist.

6. Eine Warnstruktur (100), umfassend die Halterung (10) nach einem der Ansprüche 1 bis 5 und ein Warnelement (30), das an der Halterung (10) angebracht ist.

## Revendications

1. Un support (10) destiné à être utilisé avec un élément d'avertissement (30) monté sur celui-ci, comprenant:
un corps principal (11);
une pluralité de roulettes (13);
**caractérisé par**
un ensemble d'arrêt (15) comprenant un élément de support (151), un élément de montage (152) et un élément élastique (153); dans lequel:
l'élément de support (151) est couplé au corps principal (11);
l'élément de montage (152) est monté de manière mobile sur l'élément de support (151);
l'une de la pluralité de roulettes (13) est montée de manière rotative sur l'élément de montage (152), et l'autre de la pluralité de roulettes (13) est montée de manière rotative sur le corps principal (11);
l'élément élastique (153) résiste élastiquement à l'élément de support (151) et à l'élément de montage (152) pour solliciter l'élément de montage (152);
lorsque l'élément de support (151) est soumis à une force vers le bas qui résulte de la force externe du vent sur l'élément d'avertissement (30), l'élément de support (151) s'appuie contre le sol pour maintenir le support (10) immobile;
l'ensemble d'arrêt (15) comprend en outre un élément d'arrêt (154) monté sur une extrémité inférieure de l'élément de support (151), l'élément d'arrêt (154) comprenant au moins une partie saillante (1541) configurée pour s'insérer dans le sol.

2. Le support (10) selon la revendication 1, dans lequel:
l'élément d'arrêt (154) comprend une partie de fixation (1542) et une pluralité des parties saillantes (1541); et
la pluralité des parties saillantes (1541) est située sur des côtés opposés de la partie de fixation (1542).

3. Le support (10) selon la revendication 1, dans lequel:
l'ensemble d'arrêt (15) comprend en outre un manchon (155);
le manchon (155) est fixé dans l'élément de support (151);
le manchon (155) définit une cavité de réception (1551);
l'élément de montage (152) comprend une première partie de montage (1521) et une seconde partie de montage (1523);
la première partie de montage (1521) est disposée de manière mobile dans la cavité de réception (1551);
l'une correspondante de la pluralité de roulettes (13) est emmanchée de manière rotative sur la seconde partie de montage (1523); et
l'élément élastique (153) est monté dans la cavité de réception (1551) et est en contact avec la première partie de montage (1521).

4. Le support (10) selon la revendication 3, dans lequel:
le manchon (155) définit en outre une rainure de guidage (1552); et
la seconde partie de montage (1523) passe de manière mobile à travers la rainure de guidage (1552).

5. Le support (10) selon la revendication 1, dans lequel:
le corps principal (11) comprend un élément de connexion (112), un premier élément d'extension (114), un deuxième élément d'extension (116) et un troisième élément d'extension (118);
le premier élément d'extension (114) est connecté à une partie médiane de l'élément de connexion (112);
le deuxième élément d'extension (116) et le troisième élément d'extension (118) sont respectivement connectés à deux extrémités de l'élément de connexion (112); et
l'élément de support (151) est couplé au premier élément d'extension (114).

6. Une structure d'avertissement (100) comprenant le support (10) selon l'une quelconque des revendications 1 à 5 et un élément d'avertissement (30) monté sur le support (10).
